# EUROPEAN PATENT SPECIFICATION

(11) **EP 1 476 334 B1**
(45) Date of publication and mention of the grant of the patent: **07.03.2007**
(21) Application number: 03734759.8
(22) Date of filing: 29.01.2003
(51) Int. Cl.: B60R 21/34

(54) **LAMINATE AND PROCESS FOR THE MANUFACTURE THEREOF**
LAMINAT UND VERFAHREN ZUR HERSTELLUNG DAVON
STRATIFIE ET PROCEDE DE FABRICATION DE CELUI-CI

(30) Priority: 29.01.2002 GB 0201980; 30.01.2002 GB 0202122
(43) Date of publication of application: 17.11.2004
(73) Proprietor: Corus UK Limited, London SW1P 4WY (GB)
(72) Inventor: Clough, Andy, Coventry CV3 4ST (GB)
(74) Representative: Townsend, Victoria Jayne
(86) International application number: PCT/GB2003/000367
(87) International publication number: WO 2003/064221

(56) References cited:
- EP-A- 0 370 148
- GB-A- 1 372 846
- US-A- 3 660 216
- US-A- 4 101 704
- US-A- 5 041 472
- US-A- 5 251 414

## Description

The present invention relates to a vehicle body part having improved target impact behaviour, for example a vehicle hood (bonnet) to reduce the likelihood of head injury when the vehicle is in collision with e.g. a pedestrian or a cyclist.

A vehicle hood is usually taken to mean a hinged part that (on a front-engined vehicle) when opened, allows access to the engine. However, it should be appreciated that the means provided by the invention is applicable to other bodywork, hinged or otherwise attached or other products wherein a certain impact behaviour is to be realised.

At present the hood on a vehicle is manufactured from two key elements, an outer and an inner. The outer element is generally a continuous sheet of pressed metal, e.g. made of steel or aluminium. The inner element is also pressed metal but shaped to provide the strength required for secure attachment to the vehicle as well as the stiffness required in order to maintain its shape under a wide range of service and handling conditions. The shape of the inner takes the form of a series of hat section stiffeners.

A problem of the known hood construction is that it may result in an unacceptably high risk of injury to the heads of pedestrians. The risk of injury is defined as HIC (Head Injury Criterion, also known as HPC) value and is derived from the acceleration/time response of an instrumented dummy headform projected at a vehicle hood under laboratory conditions.

For pedestrian safety purposes, the optimum hood should have low HIC values, however for the purposes of efficient vehicle packaging the hood inner must maintain a maximum clearance (typically 50 to 100mm) from engine and suspension componentry.

The technical paper entitled "Closure and Trim Design for Pedestrian Impact" delivered to the ESV Conference in the Netherlands, on the 6^{th} June 2001, discloses an automobile hood (bonnet) with a two or three layer laminate.

In particular the two layer laminate disclosed has a steel outer with a plastic inner manufactured from a BMC (Bulk Moulding Compound). BMC (also known as DMC B Dough Moulding Compound) is a readily available and commonly used material that is well known in the reinforced plastic moulding industry. The inner is processed by a hot press moulding technique in steel matched die tooling, and may be attached to the metal layer in a separate operation, typically using an adhesive.

A BMC inner hood is relatively heavy and thin. The lack of structural performance provided by such a layer requires that the hood be further stiffened in flatter areas by the use of additional polymer foam sandwich layers.

BMC comprises a resin, a filling powder such as calcium carbonate, and short, e.g. hammer milled, glass fibres each of the three mentioned constituents in approximately equal proportions. Other constituents, in small quantities include a curing agent, usually a peroxide, and an internal release agent, to stop the BMC sticking to the tool.

BMC is therefore similar to SMC B Sheet Moulding Compound, that is used for many vehicle body panels, the glass fibres In BMC being shorter in length. The two attempts at hood design described in the paper are:
- two layer laminate of BMC bonded to steel;

This may produce a desired HIC result but has the problem that the laminate has low bending stiffness.
- three layer laminate of BMC/steel sandwich panel with PVC foam in the centre;

This gives improved handling performance but has the problem that its HIC performance is inferior.

US 5587321 discloses a composite manufactured from a mixture of hollow ceramic microspheres and dry resin powder. The mixture is heated and the resin allowed to set to form a syntactic foam. The composite may be moulded into three dimensional shapes or sandwiched between sheets of other materials to form a sandwich panel. Such moulded three dimensional shapes or sandwich panels may be used in vehicle bodies, but, as they rely on supporting, sandwiching panels whose own physical properties affect impact behaviour, their use in improving the impact behaviour of the vehicle body relative to the aforementioned sandwich panels is limited.

US 5041472 describes three dimensionally moulded or sandwich panel vehicle body parts broadly similar to those described in US 5587321. The moulded parts are formed from an efficient mixture of hollow ceramic microspheres and an elastomeric binder (resin) which is achieved by the selection of large and small microspheres that form a compact mass. This grading method is well known in the cement and concrete industries and is known as aggregate.

It is an object of the present invention to overcome these problems by the use of a unique laminated material designed from first principles to be part of a pedestrian safety impact hood system.

It is also an object of the present invention to find other and better ways of altering the impact properties of products in general and more in particular in order to be able to provide a hood for an automobile with a very low HIC.

It also an object of the present invention to achieve lightweighting in products by providing a suitable layered product possibly further achieving benefits regarding but not limited to heat insulation and soundproofing.

Furthermore, it is an object of the present invention to provide a process for the manufacture of a panel according to the invention that requires low investment in tooling and negligible changes to conventional production line equipment and practice.

Furthermore, the present invention allows for the optimal collapse of a vehicle hood upon the occurrence of head impact, allowing for both reduced risk of injury to the head with a design, which protects for minimal underhood componentry clearance.

According to the invention there is provided a vehicle body part for the outer body of a vehicle and having a target impact behaviour, characterised in that the body part comprises a single ductile metallic layer and a brittle ceramic layer adhered thereto, the ceramic layer comprising essentially a filler and a thermo-setting resin, the filler being a low density filler comprising cenospheres.

It is to be understood that in this context a "ceramic layer" comprises a stiff and hard material that undergoes a brittle type of fracture when impacted. Cenospheres are well known in the polymer industry and are also known as microballoons or microspheres. The solid constituent of a cenosphere may be either ceramic or glass. A polymer mixed with a hollow filler such as cenospheres has reduced density and is often termed 'syntactic foam'.

In such a vehicle body part, on impact, the high initial force required to shatter the ceramic layer is followed by the considerably lower force needed to deform the metal layer. The resultant combination of high acceleration followed by low acceleration of the impacting head allows for a minimal HIC value, in the order of even lower than 700. This means that the vehicle body part e.g. in the form of an automotive hood collapses in a benign fashion when impacted by a pedestrian's head.

It is remarked here that it is known that in the automotive industry there are a number of materials that may be laminated to the reverse side of a metal panel; these are e.g. acoustic damping sheets and are generally based on a bitumen type material with or without fillers. These materials may be applied to the body-in-white by self adhesive "tackiness" or sprayed in place. More structural grades of laminate include materials made up of epoxy resin and glass fibre that are applied locally, e.g. by self adhesion. The glass fibre becomes impregnated with resin during the paint oven cycle, the resin then hardens and the resulting laminate forms a strengthening component, supporting areas of bodywork that may be subject to local loading e.g. adjacent to the door handle.

Although the hood design using a product according to the invention enables the deletion of most of the (conventional) hood inner it is envisaged that some residual component of the pressed metal inner be retained as a peripheral frame functioning as attachment for hinges, props, latches, guides and stops.

By choosing the composition of the ceramic layer in accordance with the invention, it is possible to achieve repeatable impact behaviour over a wide range of impact velocities and ambient conditions such as temperature and humidity for the useful life of a vehicle.

By its rigid nature and connection to the metallic layer, the ceramic layer enhances the resistance to denting caused either by local impacts e.g. from road chippings, hailstones and debris, or by service loads, e.g. hand slamming.

Preferably, the filler component of the ceramic layer is inert, lightweight and inorganic and incorporated in the ceramic layer in such an amount that a brittle, ceramic-like failure mechanism is produced when impacted.

Preferably, the filler comprises a recycled product such as fly ash. This type of filler is suitable and cost attractive.

In an aspect according to the invention, the filler comprises a form of fly ash that comprises cenospheres. Thus, the ceramic layer comprising a low density filler can be designed to be thick enough, that is e.g. 4 mm or more, to impart adequate stiffness without weight penalty, possibly even saving weight over a conventional hood construction. This also avoids the need for an additional sandwich layer, such as e.g. the PVC foam placed between the steel outer surface and the BMC inner moulding in the prior art solution described above.

In an embodiment according to the invention, the cenospheres are of essentially glass, fly ash or a mixture thereof. Such cenospheres are effective and low cost.

It is to be appreciated that a grading method such as that described in US 5041472, if used to provide the ceramic layer of the vehicle body part of the invention could provide further advantages, for example In achieveing optimized packing fractions of cenospheres in the ceramic layer.

In preferred embodiments, the ceramic layer is composed of a compound containing between 30 and 75 wt. %, preferably between 40 and 70 wt. %, more preferably between 50 and 68 wt. %, and more preferably between 55 and 65 wt. % cenospheres combined with thermo-setting resin.

At levels of filler above 30% it has been determined from scanning electron micrographs that the filler particles are mostly in point contact with each other, the resulting compounds exhibiting different combinations of strength, modulus and density. This allows the hood design engineer to specify a material that exactly matches certain requirements, e.g. acceleration requirements of the pedestrian headform impactor for pedestrian safety. At filler levels above 70% it has been found that the resin content is too low to obtain a mouldable and handleable compound.

Preferably, the thermo-setting resin is one or more of the group of resins formed by epoxy, polyester, vinylester, acrylic or phenolic resins.

These resin types have the following properties important to the invention:
a)They are sufficiently low in viscosity to enable high levels of filler to be added without resorting to high shear mixing.
b)They are of the thermo-setting type; the compound formed will therefore be easily moulded to the shape of the vehicle hood.
c)They will harden to the required levels of strength and stiffness e.g. by application of heat.
d)Once hardened, they will resist the thermal cycles of e.g. an automotive engine bay.
e)They maintain their strength and stiffness over a wide range of temperature (typically -35 °C to +120 °C) unlike the more widespread thermoplastic polymers.

Other suitable resins with similar properties will no doubt occur to the skilled addressee and are not beyond the scope of the invention.

By avoiding high shear mixing the cenospheres are prevented from being crushed.

Whilst there are advantages to powder mixing methods such as those described in US5,587,321 (such as a reduction in noxious emissions during processing and the ease with which recyclate powder and dust may be incorporated into the filler) and these may be used to practice the invention, liquid resins have been found to provide improved bonding to the cenospheres providing a more manageable composite which can be applied as a layer to an existing sheet of ductile metal without the need for sandwiching the composite between sheets of supporting material.

In a very effective embodiment according to the invention, the cenospheres are hollow microspheres of alumino-silicate with an average bulk density between 0.35 and 0.45 g/cm³.

A filler of these cenospheres gives superior results in that when applied to a test sample of sheet steel and impacted using the pedestrian headform impact rig at MIRA, the laminate failed exactly as predicted by finite element analysis. This impact behaviour resulted in an optimum deceleration of the instrumented headform producing an extremely low HIC value.

An excellent product suitable to be used in a pedestrian safe hood is provided according to the invention if one layer is either steel with a thickness of 0.5 to 1 mm, or aluminium with a thickness of 0.8 to 1.6 mm and another "ceramic" layer is of microsphere filled thermo-setting polymer with a thickness of 4 to 8 mm.

The invention is also embodied in a number of processes of producing a vehicle body part with a targeted impact behaviour, the process comprising the steps:
- manufacturing a resin based semi cured blank sheet; wherein the resin based semi cured blank is obtained by slit extruding a mixture of a filler and a resin onto a carrier film
- bonding the resin based semi cured blank and a metal sheet part into a body part, either by self adhesion or by a further adhesive layer
- curing the resulting body part, either in a dedicated oven or simultaneously with an existing oven process.

In an embodiment according to the invention, the resin based semi cured blank is obtained by extruding between two films.

Preferably, the or each film is of substantially Polyethylene (PE), or a similarly inert polymer that will not chemically or physically interact during storage.

This achieves the effect of separation of the blanks, allowing stacking without them sticking to one another; the blanks are also easily handled. Furthermore, it has been found that one of the carrier films may be left in situ on the free surface after application, allowing for:
- improved surface finish
- resistance to surface damage during vehicle build or in service
- resistance to ingress of liquids and vapours which may degrade the physical performance of the laminate

It has also been found that:
- a film left in place on the free surface may be made of aluminium or an aluminised foil; being advantageous where heat reflection back into the underhood or engine compartment is required.
- a textured carrier film imparts a texture free surface onto the laminate which gives a more repeatable fracture behaviour under impact and therefore a more repeatable HIC value over the area of the hood.

The invention is also embodied in process of producing a vehicle body part with a targeted impact behaviour comprising the steps:
- applying a curable mixture of a filler and a resin onto a metal blank
- forming the resulting part into a body part
- curing the resulting body part

Preferably, the process according to the invention is carried out so as to obtain a body part which is a product according to the invention as described herein above.

The ceramic layer can be applied directly (laminated) to the metallic layer, using either the inner panel material's self-adhesive nature or in some instances, with an additional adhesive. The ceramic layer forming the inner panel may, after lamination to the hood outer, be cured in a conventional vehicle production line oven, with curing times and temperature within the normal range required to cure the conventional hood hem flange adhesive, e.g. 170 °C for 10 minutes, negating the cost of extra operations and equipment.

The ceramic layer is designed to replace the conventional inner metal framework, both providing all the structural requirements as well as greatly reducing injury to a pedestrian's head in the event of a collision.

The inner ceramic laminate panel is easily and cost effectively tuneable to the impact requirements of a wide range of hood shapes and sizes by adapting formulation of the ceramic layer.

Another advantage is the inner panel having sound deadening properties sufficient to allow a cost saving through deletion of all or part of the existing under hood soundproofing.

By its nature as a low-density syntactic foam, the hood outer is insulated from the heat of the engine bay and, where applicable, saving the cost of a heat shield.

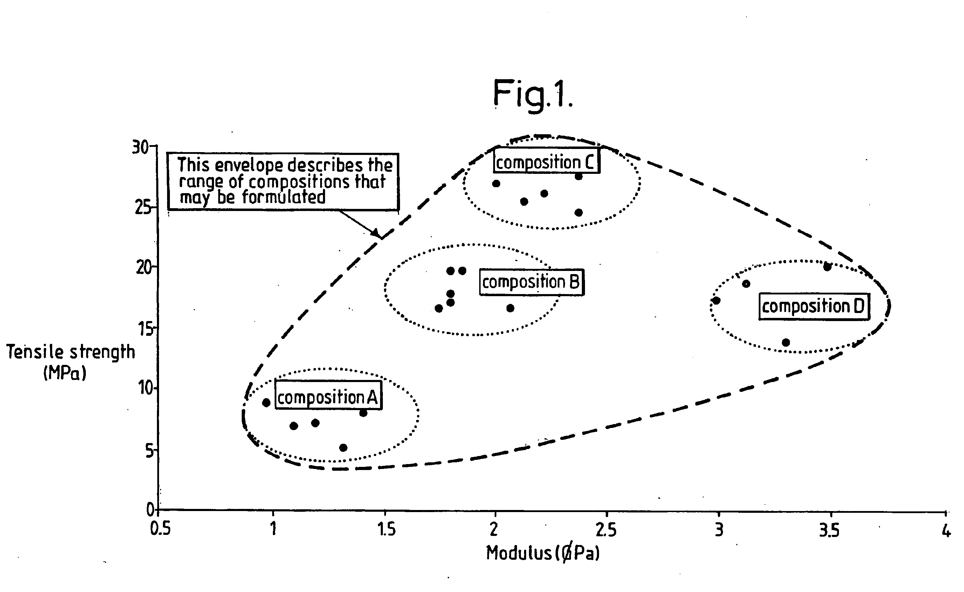

The invention will now be illustrated by the following non-limiting examples including table 1 and referring to figure 1.

### EXAMPLE 1

A series of ceramic layers consisting of composition A (Table 1) at thicknesses ranging from 3mm to 6mm were applied to a 0.8mm thick, BH180 grade, flat steel sheet measuring 600mm x 600mm. The thickness of steel was chosen to represent the middle of the range of thicknesses currently in use on production vehicle hoods. The resulting laminates were tested using a dropped headform dropped from a height sufficient to reach a velocity of 8.5m/s before impact. The ceramic layer on the underside of the test samples fractured in exactly the way predicted, and allowed the steel to progressively buckle as required. Detailed finite element analysis of this test configuration identified a double peak in the acceleration/time curve. This double peak has the effect of increasing the HIC value, irrespective of the low maximum acceleration forces obtained. It was therefore decided that the headform impact testing of curved panels, similar in curvature to a production vehicle hood, would prevent the "double peak" problem and give lower HIC values and more repeatable results.

### EXAMPLE 2

A series of ceramic layers consisting of composition A (Table 1) at thicknesses of 3mm, 4.5mm and 6mm thick were applied to a 0.8mm thick, BH180 grade, steel sheet measuring 600mm x 600mm. The steel sheets had been formed to a double curvature, rising to a height of 15mm in the centre, to simulate the curvature and therefore stiffness of a production vehicle hood. The shaped laminates were tested using the child headform instrumented impact rig at MIRA, Warwickshire, England. The HIC results extrapolated from this series of tests ranged from 167 to 405; values substantially lower than then would be expected from tests on sections removed from conventionally constructed steel or aluminium hoods. These results correlated well with those from finite element analysis.

Finite element analysis predicts that HIC performance remains below 1000 for a hood with up to 8mm of ceramic laminate thickness, this is to be investigated in further tests.

### EXAMPLE 3

In a series of experiments it was found that the cenospheres and the resins can be mixed together in a range of weight fractions, resulting in a series of laminates A, B, C and D according to table 1 below. Figure 1 shows the wide ranges in physical properties that can be achieved with the laminates A, B, C and D.

**TABLE 1**

| **Ceramic layer composition** | **filler percentage** | **filler type** | **resin type** |
|---|---|---|---|
| A | 50 | Alumino-silicate hollow microspheres with an average bulk density between 0.35 and 0.45 g/cm³ | Bisphenol A-Epichlorohydrin |
| B | 20 | | |
| C | 10 | | |
| D | 30 | | |

Since HIC values are derived from the acceleration/time output of a mass, i.e. the instrumented headform, whilst undergoing an impact against the panel to be tested, both the stiffness (thickness and shape) and the mass weight of the panel play a role, reference is made to said figure 1.

Since the shape and styling of a vehicle hood are fixed very early in the development program, a laminate material with strength and stiffness that can be tuned to suit a particular hood style is a great advantage. By comparison, conventional hood inner materials are metallic and have a fixed modulus, e.g. for steel of 210 GPa.

Figure 1 illustrates the range of properties that can be achieved by mixing one grade of epoxy resin with one grade of cenosphere. It has been found that alternative resins formulations and resin types provide a further range of properties. It has also been found that alternative cenosphere types and mixtures of types provide another range of properties. The invention thus enables the manufacture of materials tailored to the strength and stiffness requirements of every hood shape and size.

## Claims

1. A vehicle body part for the outer body of a vehicle having a target impact behaviour, **characterised in that** the body part comprises a single ductile metallic layer and a brittle ceramic layer adhered thereto, the ceramic layer comprising essentially a filler and a thermo-setting resin, the filler being a low density filler comprising cenospheres.

2. A vehicle body part according to claim 1, **characterised in that** the filler comprises a recycled product such as fly ash.

3. A vehicle body part according to claim 1 or 2, **characterised in that** the cenospheres are of essentially glass, fly ash or a mixture thereof.

4. A vehicle body part according to any of claims 1-3, **characterised in that** the ceramic layer is composed of a compound containing between 30 and 75 wt. % low density filler combined with thermo-setting resin

5. A vehicle body part according to any of claims 1-4, **characterised in that** the ceramic layer is composed of a compound containing between 40 and 70 wt. % low density filler combined with thermo-setting resin

6. A vehicle body part according to any of claims 1-5, **characterised in that** the ceramic layer is composed of a compound containing between 50 and 68 wt. % low density filler combined with thermo-setting resin

7. A vehicle body part according to any of claims 1-6, **characterised in that** the ceramic layer is composed of a compound containing between 55 and 65 wt. % low density filler combined with thermo-setting resin

8. A vehicle body part according to any of claims 1-7 , **characterised in that** the thermo-setting resin is one or more of the group of resins formed by epoxy, polyester, vinylester, acrylic or phenolic resins.

9. A vehicle body part according to any of claims 1-8 , **characterised in that** the filler is inorganic.

10. A vehicle body part according to any of claims 1-9 , **characterised in that** the cenospheres are hollow microspheres of alumino-silicate with an average bulk density between 0.35 and 0.45 g/cm³.

11. A vehicle body part according to any of claims 1-10, **characterised in that** one layer is of steel with a thickness of 0.5 to 1 mm and another layer is of microsphere filled thermo-setting polymer with a thickness of 4 to 8 mm.

12. A vehicle body part according to any of claims 1-11, **characterised in that** one layer is of aluminium with a thickness of 0.8 to 1.6 mm and another layer is of microsphere filled thermo-setting polymer with a thickness of 4 to 8 mm.

13. A vehicle body part as claimed in any preceding claim wherein the body part is a vehicle hood.

14. A vehicle comprising one or more body parts according to any of claims 1 to 13.

15. Process of producing a vehicle body part with a targeted impact behaviour comprising the steps:
- manufacturing a resin based semi cured blank
- connecting the resin based semi cured blank and a metal sheet part into a body part
- curing the resulting body part
wherein the resin based semi cured blank is obtained by slit extruding a mixture of a filler and a resin onto a carrier film.

16. Process according to claim 15 wherein the resin based semi cured blank is obtained by extruding between two films.

17. Process according claim 15 or 16, wherein the or each film is of substantially PE.

18. Process of producing a vehicle body part with a targeted impact behaviour comprising the steps:
- applying a curable mixture of a filler and a resin onto a metal blank
- forming the resulting part into a body part
- curing the resulting body part

19. Process according to any one of claims 16-18, wherein the resulting body part is a product according to any of claims 1-13.

20. Use of a vehicle body part as claimed in any of claims 1-14 to improve the impact properties of a vehicle, whereby to minimise the risk of serious injury or death to a person encountering the vehicle when the vehicle and or pedestrian is in motion.

## Patentansprüche

1. Fahrzeugkarosserieteil für den äußeren Aufbau eines Fahrzeuges, das ein Aufprallverhalten zeigt, **dadurch gekennzeichnet, dass** das Karosserieteil aus einer einzelnen duktilen Metallschicht und einer spröden damit verbundenen Keramikschicht besteht, wobei die Keramikschicht im Wesentlichen aus einem Füllstoff und einem Duroplast besteht, und der Füllstoff eine geringe Dichte mit Cenospheren aufweist.

2. Fahrzeugkarosserieteil nach Anspruch 1, **dadurch gekennzeichnet, dass** der Füllstoff aus einem recycelbaren Produkt, beispielsweise aus Flugasche, besteht.

3. Fahrzeugkarosserieteil nach den Ansprüchen 1 oder 2, **dadurch gekennzeichnet, dass** die Cenospheren im Wesentlichen aus Glas, Flugasche oder einer Mischung hiervon bestehen.

4. Fahrzeugkarosserieteil nach einem der Ansprüche 1 bis 3, **dadurch gekennzeichnet, dass** die Keramikschicht aus einer Mischung zusammengesetzt ist, die zwischen 30 und 75 Gewichtsprozent des Füllstoffes mit geringer Dichte kombiniert mit einem Duroplast enthält.

5. Fahrzeugkarosserieteil nach einem der Ansprüche 1 bis 4, **dadurch gekennzeichnet, dass** die Keramikschicht aus einer Mischung zusammengesetzt ist, die zwischen 40 und 70 Gewichtsprozent des Füllstoffes geringer Dichte kombiniert mit einem Duroplast enthält.

6. Fahrzeugkarosserieteil nach einem der Ansprüche 1 bis 5, **dadurch gekennzeichnet, dass** die Keramikschicht aus einer Mischung zusammengesetzt ist, die zwischen 50 und 68 Gewichtsprozent des Füllstoffes geringer Dichte kombiniert mit einem Duroplast enthält.

7. Fahrzeugkarosserieteil nach einem der Ansprüche 1 bis 6, **dadurch gekennzeichnet, dass** die Keramikschicht aus einer Mischung zusammengesetzt ist, die zwischen 55 und 65 Gewichtsprozent des Füllstoffes geringer Dichte kombiniert mit einem Duroplast enthält.

8. Fahrzeugkarosserieteil nach einem der Ansprüche 1 bis 7, **dadurch gekennzeichnet, dass** der Duroplast aus einem oder mehreren Harzen der Gruppe besteht, die Epoxydharz, Polyesterharz, Vinylesterharz, Acrylharz oder Phenolharz enthält.

9. Fahrzeugkarosserieteil nach einem der Ansprüche 1 bis 8, **dadurch gekennzeichnet, dass** der Füllstoff anorganisch ist.

10. Fahrzeugkarosserieteil nach einem der Ansprüche 1 bis 9, **dadurch gekennzeichnet, dass** die Cenospheren hohle Mikrokugeln aus Aluminosilikat sind, die eine durchschnittliche Schüttdichte zwischen 0,35 und 0,45 g/cm³ aufweisen.

11. Fahrzeugkarosserieteil nach einem der Ansprüche 1 bis 10, **dadurch gekennzeichnet, dass** die eine Schicht ein Stahlblech mit einer Dicke zwischen 0,5 und 1 mm ist, und die andere Schicht ein mit Mikrokügelchen angefülltes Duroplastpolymer mit einer Dicke zwischen 4 und 8 mm aufweist.

12. Fahrzeugkarosserieteil nach einem der Ansprüche 1 bis 11, **dadurch gekennzeichnet, dass** die eine Schicht ein Aluminiumblech mit einer Dicke zwischen 0,8 und 1,6 mm ist, und die andere Schicht ein mit Mikrokügelchen angefülltes Duroplastpolymer mit einer Dicke zwischen 4 bis 8 mm aufweist.

13. Fahrzeugkarosserieteil nach einem der vorhergehenden Ansprüche, bei welchem das Karosserieteil eine Motorhaube ist.

14. Fahrzeug mit einem oder mehreren Karosserieteilen gemäß einem der Ansprüche 1 bis 13.

15. Verfahren zur Erzeugung eines Fahrzeugkarosserieteiles mit Aufprallverhalten, welches die folgenden Schritte umfasst:
- Herstellung eines aus einem Harz basierenden halb ausgehärteten Rohlings;
- Verbindung des auf einem Harz basierenden halb ausgehärteten Rohlings mit einem Metallblechteil zu einem Karosserieteil;
- Aushärtung des sich ergebenden Karosserieteils;
wobei der auf Harz basierende halb ausgehärtete Rohling durch Schlitzextrusion einer Mischung eines Füllstoffes und eines Harzes auf einem Trägerfilm erhalten wird.

16. Verfahren nach Anspruch 15, bei welchem der auf Harz basierende halb ausgehärtete Rohling durch Extrusion zwischen zwei Filmen erhalten wird.

17. Verfahren nach den Ansprüchen 15 oder 16, bei welchem der oder jeder Film im Wesentlichen aus Polyethylen besteht.

18. Verfahren zur Erzeugung eines Fahrzeugkarosserieteils mit einem Aufprallverhalten mit den folgenden Schritten:
- es wird eine aushärtbare Mischung aus Füllstoff und Harz auf einem metallischen Rohling aufgebracht;
- es wird das sich ergebende Teil zu einem Karosserieteil verformt,
- es wird das sich ergebende Karosserieteil ausgehärtet.

19. Verfahren nach einem der Ansprüche 16 bis 18, bei welchem das sich ergebende Karosserieteil ein Erzeugnis gemäß einem der Ansprüche 1 bis 13 ist.

20. Benutzung eines Fahrzeugkarosserieteils nach einem der Ansprüche 1 bis 14 zur Verbesserung der Aufpralleigenschaften eines Fahrzeuges, wodurch die Gefahr schwerer Verletzungen oder die Gefahr des Todes einer Person minimiert wird, die auf ein Fahrzeug auftrifft, wenn das Fahrzeug oder der Fußgänger in Bewegung befindlich ist.

## Revendications

1. Pièce de caisse de carrosserie pour véhicule pour la caisse de carrosserie externe d'un véhicule possédant un comportement de résistance aux chocs ciblé, **caractérisée en ce que** la pièce de caisse de carrosserie comprend une couche métallique ductile unique et une couche céramique cassante qui y adhère, la couche céramique comprenant essentiellement une matière de charge et une résine thermodurcissable, la matière de charge représentant une matière de charge de basse densité comprenant des cénosphères.

2. Pièce de caisse de carrosserie pour véhicule selon la revendication 1, **caractérisée en ce que** la matière de charge comprend un produit recyclé tel que des cendres volantes.

3. Pièce de caisse de carrosserie pour véhicule selon la revendication 1 ou 2, **caractérisée en ce que** les cénosphères sont constituées essentiellement de verre, de cendres volantes ou d'un mélange des deux.

4. Pièce de caisse de carrosserie pour véhicule selon l'une quelconque des revendications 1 à 3, **caractérisée en ce que** la couche de céramique est composée d'un composé contenant une matière de charge de basse densité en une quantité entre 30 et 75 % en poids, en combinaison avec une résine thermodurcissable.

5. Pièce de caisse de carrosserie pour véhicule selon l'une quelconque des revendications 1 à 4, **caractérisée en ce que** la couche de céramique est composée d'un composé contenant une matière de charge de basse densité en une quantité entre 40 et 70 % en poids, en combinaison avec une résine thermodurcissable.

6. Pièce de caisse de carrosserie pour véhicule selon l'une quelconque des revendications 1 à 5, **caractérisée en ce que** la couche de céramique est composée d'un composé contenant une matière de charge de basse densité en une quantité entre 50 et 68 % en poids, en combinaison avec une résine thermodurcissable.

7. Pièce de caisse de carrosserie pour véhicule selon l'une quelconque des revendications 1 à 6, **caractérisée en ce que** la couche de céramique est composée d'un composé contenant une matière de charge de basse densité en une quantité entre 55 et 65 % en poids, en combinaison avec une résine thermodurcissable.

8. Pièce de caisse de carrosserie pour véhicule selon l'une quelconque des revendications 1 à 7, **caractérisée en ce que** la résine thermodurcissable représente une ou plusieurs résines choisies parmi le groupe formé par des résines époxy, des résines de polyester, des résines d'ester vinylique, des résines acryliques ou des résines phénoliques.

9. Pièce de caisse de carrosserie pour véhicule selon l'une quelconque des revendications 1 à 8, **caractérisée en ce que** la matière de charge est une matière de charge inorganique.

10. Pièce de caisse de carrosserie pour véhicule selon l'une quelconque des revendications 1 à 9, **caractérisée en ce que** les cénosphères représentent des microsphères creuses d'alumino-silicate possédant une masse volumique apparente moyenne entre 0,35 et 0,45 g/cm³.

11. Pièce de caisse de carrosserie pour véhicule selon l'une quelconque des revendications 1 à 10, **caractérisée en ce qu'**une couche est constituée d'acier possédant une épaisseur de 0,5 à 1 mm et une autre couche est constituée d'un polymère thermodurcissable contenant une matière de charge constituée par des microsphères, possédant une épaisseur de 4 à 8 mm.

12. Pièce de caisse de carrosserie pour véhicule selon l'une quelconque des revendications 1 à 11, **caractérisée en ce qu'**une couche est constituée d'aluminium possédant une épaisseur de 0,8 à 1,6 mm et une autre couche est constituée d'un polymère thermodurcissable contenant une matière de charge constituée par des microsphères, possédant une épaisseur de 4 à 8 mm.

13. Pièce de caisse de carrosserie pour véhicule selon l'une quelconque des revendications précédentes, dans laquelle la pièce de caisse de carrosserie pour véhicule est un capot de véhicule automobile.

14. Véhicule comprenant une ou plusieurs pièces de caisse de carrosserie selon l'une quelconque des revendications 1 à 13.

15. Procédé de fabrication d'une pièce de caisse de carrosserie pour véhicule manifestant un comportement de résistance aux chocs ciblé, comprenant les étapes consistant à :
- préparer un flan semi-durci à base de résine ;
- relier le flan semi-durci à base de résine et une pièce en forme de feuille métallique pour former une pièce de caisse de carrosserie ;
- durcir la pièce de caisse de carrosserie résultante ;
le flan semi-durci à base de résine étant obtenu par extrusion par filière droite plate de mélange d'une matière de charge et d'une résine sur un film faisant office de support.

16. Procédé selon la revendication 15, dans lequel le flan semi-durci à base de résine est obtenu par extrusion entre deux films.

17. Procédé selon la revendication 15 ou 16, dans lequel le film ou chacun de ces derniers est constitué essentiellement de PE.

18. Procédé de fabrication d'une pièce de caisse de carrosserie pour véhicule manifestant un comportement de résistance aux chocs ciblé, comprenant les étapes consistant à :
- appliquer un mélange durcissable d'une matière de charge et d'une résine sur un flan métallique ;
- transformer la pièce résultante en une pièce de caisse de carrosserie ;
- durcir la pièce de caisse de carrosserie résultante.

19. Procédé selon l'une quelconque des revendications 16-18, dans lequel la pièce de caisse de carrosserie résultante est un produit selon l'une quelconque des revendications 1 à 13.

20. Utilisation d'une pièce de caisse de carrosserie pour véhicule selon l'une quelconque des revendications 1 à 14 dans le but d'améliorer les propriétés de résistance aux chocs manifestées par un véhicule, par laquelle on minimise le risque de blessures graves ou de décès d'une personne entrant en contact avec le véhicule lorsque le véhicule et/ou le piéton sont en mouvement.
